(19) Europäisches Patentamt
European Patent Office
Office européen des brevets

(11) Publication number: **0 166 649**
**A2**

(12) # EUROPEAN PATENT APPLICATION

(21) Application number: **85401155.8**

(22) Date of filing: **12.06.85**

(51) Int. Cl.⁴: **C 03 C 25/02**, G 02 B 6/02

(30) Priority: **26.06.84 US 624643**
**24.08.84 US 644305**

(43) Date of publication of application: **02.01.86**
**Bulletin 86/1**

(84) Designated Contracting States: **DE FR GB SE**

(71) Applicant: **International Standard Electric Corporation, 320 Park Avenue, New York New York 10022 (US)**

(72) Inventor: **Biswas, Dipak R., 2609 Mallard Dr. S.W., Roanoke, VA. 24018 (US)**
Inventor: **Raychaudhuri, Satyabrata, 3015L Ordway Dr. N.W., Roanoke, VA. 24017 (US)**

(74) Representative: **Kohn, Philippe et al, ITT Data Systems France S.A. Tour Maine-Montparnasse 33, avenue du Maine, F-75755 Paris Cedex (FR)**

(54) **Hermetic coating for an optical fiber and method of forming the same.**

(57) An optical fiber which has just been drawn from an optical preform is provided with two external hermetic coatings. The primary coating is a metallic coating provided by, for example, using a heterogeneous nucleation thermochemical deposition technique. This technique involves passing the fiber through a reaction zone which contains a gaseous medium that includes a reactant which decomposes, or a mixture of reactants which chemically react, at a predetermined temperature to form the material of the coating. The second coating is provided by immersing the fiber in a deposition bath containing a liquid medium which includes at least one reactant capable of deposition onto the primary coating to form a secondary coating. The deposition process may be achieved by applying a current through the medium at a predetermined temperature or by including reactants in the medium which will deposit at predetermined temperatures without applying a current. The resulting fiber may then be provided with an additional polymer coating layer.

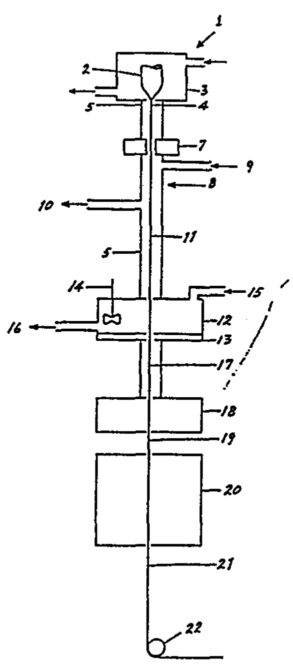


EP 0 166 649 A2

This invention relates generally to coating of optical glass fibers and in particular to such coating that is carried out immediately after the fiber is formed which results in reducing abrasion to the fiber and interaction of the environment with the fiber, and increasing the life time of the fiber during both storage and use.

Glass optical fibers when initially formed have high tensile strengths. After extended periods of use or storage the optical fibers may break when subjected to tensile stresses substantially lower than the original tensile strength rating of the fiber. One reason for this breakage, known as static fatigue, is the development of surface imperfections along the glass outer perimeter which form microcracks. This fatigue is at least in part attributable to the presence of water molecules and hydroxyl groups at the glass surface of the fibers. The water attacks the glass and causes formation of weak bonds which are broken by applied stress.

With glass-on-glass optical fibers where the core comprises a glass material and the cladding comprises a glass material, the presence of water molecules on the outer glass surface tends to cause the glass structure at the outer surface to become substantially weakened over a period of time so that the fiber ruptures under stress forces that would be incapable of causing the fibers to fracture in the absence of water or water vapor.

In the fiber forming operation, for example, fiber drawing, the glass-on-glass optical fiber is frequently coated with a polymer, such as a silicone resin, immediately after formation in order to preserve its pristine strength and for handling ease. Although the silicone material is effective to prevent dust particles from contacting the outer glass surface, the silicone material is relatively pervious to water. Over a period of exposure in air, at ordinary concentrations of water vapor, water is able to permeate through the silicone layer and to interact with the outer glass surface, with the above-mentioned deleterious consequences.

The same mechanism of static fatigue occurs with plastic clad optical fibers where the core material comprises silica or other glass and the cladding comprises a silicone material or other polymer.

One method that has been employed during the manufacture of each of these fibers to overcome the problem of water penetration is the application of a thermoplastic resin over the silicone material. Although the extruded thermoplastic jacket covering the silicone material reduces the penetration of water through the silicone layer to some degree, water still can permeate through the jacket to the silicone material and from there to the glass surface of the core, again resulting in degradation of the core glass strength.

An alternative to using the silicone coating process is sealing the drawn fiber surface from the surrounding environment by coating the initially formed fiber with a metallic material, such as aluminum or nickel, or with a dielectric material, such as silicon nitride or tin oxide. Such sealing can be performed by using chemical vapor deposition (CVD). However, the CVD process has several disadvantages such as impingement of coating particles that are formed in a gaseous medium against the pristine glass fiber to produce surface damage, non-uniform coating thickness and large grains of coating material.

The interaction of coating particles with the fiber surface can be eliminated and an initially hermetic coating on the fiber may be obtained by means of a heterogeneous nucleation thermochemical deposition (HNTD) process, thus preventing the degradation of fiber strength over the lifetime of the fiber. The HNTD process may be used to apply either a metallic or a dielectric coating to the fiber surface. Important considerations in using the HNTD process are the surface temperature of the fiber and the deposition time. While the surface temperature can be maintained adequately, the thickness of the primary coating is usually thin, that is, much less than one micron for a fiber drawing speed of approximately 20-40 meters per minute. A thicker coating is preferable for maintaining hermeticity.

Accordingly, it is an object of the present invention to avoid the disadvantages of the prior art.

More particularly, it is an object of the present invention to develop a method for forming a uniform and adequately thick coating on an optical fiber to provide hermeticity.

Another object of the present invention is to provide a hermetic coating of a sufficient thickness on an optical fiber to provide mechanical strength.

It is an additional object to develop an apparatus for performing the above method.

It is another object of this invention to develop a method providing the level of temperature necessary for carrying out the primary coating process.

It is a further object of the present invention to provide an apparatus for maintaning adequate temperature at the fiber surface.

It is a still further object of this invention to provide an apparatus for applying optical fiber coatings which eliminates exposure to harmful coating ingredients.

It is still another object of the present invention to construct the apparatus of the type here under consideration so as to be simple in construction, inexpensive to manufacture, and reliable in operation.

An additional object of the present invention is to design the apparatus of the above type so as to be capable of depositing the hermetic coating on the fiber without reducing the mechanical strength of the fiber.

In pursuance of these objects and others which will become apparent hereafter, the present invention provides a method and apparatus for hermetically sealing an optical fiber immediately after formation. This is accomplished by sequentially providing the optical fiber with two coatings, at least one of which is hermetic.

One feature of the present invention resides in a method of depositing the first of such coatings using the heat of the fiber from the fiber forming process to provide the temperature required for the deposition.

Another feature of the present invention resides in the provision of an apparatus including an insulated shielding element extending from the draw furnace through which the fiber passes in order to maintain the surface temperature of the fiber.

An additional feature of the invention is maintaining a pressure just below atmospheric pressure inside the reaction chamber so that reactants used for the deposition process cannot escape from the reactor.

Still another feature of the present invention resides in the provision of an apparatus in which a section of the apparatus may be easily removed or replaced by another section which performs the same or a different function.

Another feature of the present invention resides in a method of forming a secondary coating by passing the fiber through a liquid deposition bath containing a liquid medium which includes at least one reactant capable of deposition at a predetermined temperature onto the primary coating to form the secondary coating.

Above-mentioned and other features and objects of this invention will become more apparent by reference to the following description taken in conjunction with the accompanying drawing, in which:

Fig. 1 is a diagrammatic side elevational view of an apparatus according to one embodiment of the present invention for producing a coated fiber;

Fig. 2 is a view similar to Fig. 1 but showing a modified construction of the apparatus of the present invention;

Fig. 3 is a cross-sectional view of a coated fiber as produced by the apparatus of Fig. 1 or Fig. 2;

Fig. 4 is a diagrammatic side elevational view of an apparatus according to another embodiment of the present invention for producing a coated fiber;

Fig. 5 is a side elevational view of the upper portion of the apparatus of Fig. 4 illustrating a modular construction;

Fig. 6 is a side elevational view of the lower portion of the apparatus of Fig. 4 also illustrating a modular construction; and

Fig. 7 is a cross-sectional view of a coated fiber as produced by the apparatus of Fig. 4.

Referring more particular to the drawings, an apparatus for producing primary and secondary coatings on an optical fiber is denoted in Fig. 1 and is generally identified by the reference numeral 1. In the apparatus 1, an optical fiber 4 is drawn from a preform 2 by a drawing mechanism 22 mounted at the end of the apparatus 1 and is hermetically sealed during such drawing process. Apparatus for producing only the primary coating on an optical fiber 4 is generally identified in Fig. 2 as

reference numeral 30. In Fig. 2, the optical fiber 4 is also drawn from the preform 2 by the drawing mechanism 22 which in this instance mounted at the end of a primary reactor 8. In both cases, the optical fiber 4 is drawn in a draw furnace 3 in a conventional manner. The portion of the preform 2 which is received in the draw furnace 3 is heated in a conventional manner, such as by hot gases, a plasma flame or by radiation.

As may be seen in Fig. 3, the formed fiber 4 in its final condition existing after it has emerged from the apparatus 1 includes an optical fiber 40, such as glass or the like, a primary hermetic metallic coating 41 produced by, for example, a heterogeneous nucleation thermochemical deposition process in a reactor 8, a secondary metallic coating 42 produced by the process of the present invention and an outer coating 43 of organic material which is applied in the polymer coater 18 and cured in a curing oven 20.

When the fiber 4 is drawn from a solid preform, it eventually passes through a polymer coater to preserve the pristine fiber surface and for handling ease as is conventional in fiber drawing processes. Thus, the primary coating and the secondary coating processes of this invention have to be carried out in between the drawing furnace 3 and the polymer coater 18.

Referring again to Figs. 1 and 2, the primary coating 41 is applied to the outer surface of the fiber 4 immediately after the fiber 4 has left the draw furnace 3. The freshly drawn fiber 4 must be provided with the primary coating 41 prior to suffering any appreciable damage due to environmental influences. To achieve this, the draw furnace 3 and the reactor 8 may either be situated directly above one another or form a structural unit by having a common housing or, as shown in Figs. 1 and 2, a tubular insulating shielding element 5 may be interposed between the draw furnace 3 and the reactor 8. The fiber 4 then passes through the interior of the

insulating shielding element 5 and is thus protected from environmental influences. A particular advantage of this latter approach is that the shielding element 5 may be provided with a diameter controller, designated as 7 in Figs. 1 and 2, to permit supervision of the drawing operation.

One process of applying the primary coating is by means of a heterogeneous nucleation thermochemical deposition (HNTD) process as described in US patent application Serial No. 382,856, filed May 28, 1982, in the names of D.R. Biswas and D.K. Nath, incorporated herein by reference. In this process the fiber 4 passes into the interior of the reactor 8 which has an inlet port 9 into which a reactant gas is admitted and an outlet port 10 from which the spent reactant gas is discharged. The reactant gas consists of or contains at least one reactant or substance which, when heated to a predetermined temperature, releases the material of the hermetic coating which is to be applied to the exterior of the fiber 4 in the primary reactor 8. In the above-mentioned patent application, elliptical mirrors reflect radiation emitted from an infrared radiation source to heat the surface of the fiber 4 so that the reaction may take place thereon. By this process, formation of the coating particles occurs at the fiber surface rather than at an area adjacent the fiber surface thereby substantially eliminating impingement of such particles on the pristine glass surface. It may be seen that the reactant gas passes through the primary reactor 8 in cocurrent flow to the advancement of the fiber 4 through the reactor 8.

The vapor of the volatile metal compounds constituting the reactants is generated by evaporation. This evaporation may be accomplished either by heating a volatile compound or by passing a non-reactive gas over or through the volatile compound. Such compound or compounds then react into the material of the primary coating 41 immediately at the surface of the fiber 4 with simultaneous deposit. Any volatile byproducts must be transported away through the exhaust 10.

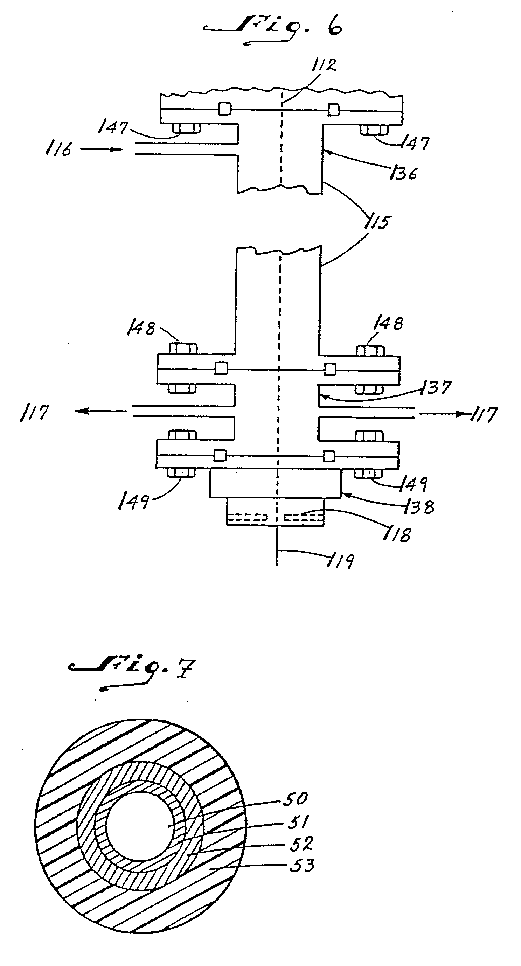

In the present invention, the temperature needed for performing the primary coating process may be obtained by retention of the heat from the fiber forming process. Reference will now be made to Figs. 1 and 4 wherein the same reference characters designate corresponding parts. In apparatus 1 1 and in apparatus 101 the fiber 4 is drawn from the preform 2 in the draw furnace 3 at a draw temperature of approximately 2200$^{o}$C. As the just drawn fiber 4 emerges from the draw furnace 3 it is still hot from the drawing operation. In order to prevent the fiber 4 from losing its heat by exposure to surrounding air, the fiber 4 passes through the insulating shielding element 5. By means of this insulating shielding element 5, the temperature necessary for formation of the primary coating particles at the fiber surface will be maintained at the fiber surface without the need for additional heating means. It has been found that as the distance between the draw furnace 3 and the primary reactor 8 increases, the surface temperature of the fiber 4 decreases. However, as the draw speed increases, the surface temperature of the fiber 4 can be retained at a higher level than during a slower draw speed due to decreased time in the reactor and consequent shortened length of time during which loss of heat from the fiber surface can occur. It has also been found that, as the diameter of the fiber is increased, the surface temperature of the fiber 4 is increased for a fixed draw speed. Additionally, as the gas flow rate is increased, the surface temperature of the fiber 4 is decreased due to the cooling effect of the increased flow. By experimentation, the distance between the draw furnace 3 and the primary reactor 8, draw speed, fiber diameter, gas flow rates and other parameters which resulted in successful depostion of either metallic or dielectric primary coatings were determined.

It has been found that temperatures at the fiber surface of up to approximately 600$^{o}$C were retained from the drawing process.

A preheater (not shown) positioned around the shielding element 5 may be used to minimize the difference between the surface temperature of the fiber 4 and the surrounding environment. Therefore, the drop in the surface temperature of the fiber 4 is reduced. The use of reactants which deposit at greater surface temperatures is then possible. The preheater may be a resistance heating furnace, a quartz heating element or any other suitable means.

Most of the reactant gases used in the primary deposition process are harmful. Therefore the primary reactor 8 is designed to maintain a pressure inside the reactor which is just below that of the ambient atmosphere so that the reactants cannot escape from the reactor during movement of the fiber 4 therethrough. Such pressure in the reactor 8 is maintained below that of the ambient atmosphere by means of a vacuum system, exhaust pump or other suitable means.

Irises 107 and 111 are positioned at the entrance and exit respectively of the primary reactor 8 in order to help retain the reactants inside the reactor 8 while permitting passage of the fiber being coated therethrough. The iris 107 additionally prevents escape of the heat of the drawing furnace 3.

The particular construction of the shielding element 5 and primary reactor 8 is more fully described below with reference to Fig. 5.

The following examples of primary coating deposition using retained heat from a fiber forming process are given by way of illustration:

EXAMPLE 1

Metallic coatings, of, for example, aluminum and nickel, were deposited on hot optical glass fiber by carrying out an HNTD, CVD or other deposition process using as reactants tri-isobutyl aluminum and isobutylene at 260$^{o}$C for aluminum deposition, and nickel carbonyl at 200$^{o}$C for nickel deposition. These temperatures were

retained from the fiber forming process. The results of strength and static fatigue of both the aluminum and nickel coated fibers show an improvement of 20-40% over an uncoated fiber drawn from the same optical preform. Other metals can also be deposited on optical fiber by using this process.

EXAMPLE 2

A dielectric coating, of, for example, tin oxide was deposited on a hot optical glass fiber by carrying out conventional CVD reaction of tetramethyl tin and oxygen on a hot optical glass fiber at around $500^{\circ}C$. This heat was retained from the fiber forming process. The results of strength and static fatigue of the tin oxide coated fiber show an improvement of more than 20% over an uncoated fiber drawn from the same preform. Other dielectrics, such as silicon nitride, oxynitride, boron nitride, any oxides and carbides can be deposited on optical fibers by using this process.

While we have described the formation of the primary coating using the HNTD process, it is clear that the retained heat process may be used with an optical fiber which has a coating deposited by any other suitable means as long as that coating provides the basis necessary for the deposition and adherence of a secondary coating having strength, uniformity and hermeticity.

Where a primary coating is applied by a CVD process, a secondary hermetic coating is deposited on the first coating in order to minimize or eliminate any pin holes which may have formed in the first coating. Where the primary coating is deposited by an HNTD or other process it may be desirable to increase the overall thickness of the coating to further improve hermeticity by the application of a secondary coating.

The secondary coating may be applied in several ways. One method as shown in Fig. 1 is applying such secondary coating by an electrodeposition bath. This method may be used where an optical fiber has a primary coating which is

metallic. Such metallic primary coating may be deposited by the HNTD process or by any other suitable means as long as that metallic coating provides the basis necessary for the deposition and adherence of a secondary coating having strength, uniformity and hermeticity.

Referring to Figs. 1 and 2, it may be seen that the fiber 11 which has acquired the primary hermetic coating in the reactor 8 is conducted through the shielding element 5 into a liquid deposition bath 12. In Fig. 1, the fiber 11 is conducted into the liquid deposition bath 12 after passing through the primary reactor and in Fig. 2 the fiber 11 is conducted into the liquid deposition bath 12 after leaving the drawing mechanism 22. The liquid deposition bath 12 includes heating means 13, stirring means 14, inlet 15, and outlet 16 The heating means 13 may be a hot plate, an electrical heating coil, or any other means which will maintain the temperature of the bath at the level necessary of the ionic materials in the solution and deposition of the metal ions onto the primary coating. The maintenance of the temperature level of the liquid deposition bath is an important consideration in the deposition of the secondary coating. The bath temperatures necessary for various metallic coatings are given in Tables I and II.

The stirring means 14 may be any device which will cause movement of the liquid depostion bath 12 so as to allow the even distribution of the ionic elements throughout the solution thereby permitting deposition of a more uniform coating.

The secondary coating 42 may be of a metallic composition which is the same as or different from the metallic composition of the primary coating 41 on which it is being deposited.

The process of applying a coating onto an optical fiber from a liquid medium may be achieved by using either an electrodeposition process or an "electroless"

deposition process. The electroless deposition process is the process of depositing a metal without utilizing electrodes.

Where long lengths of fiber are being processed, it ispreferable to employ an "electroless" deposition process, so that a continuous drawing speed may be maintained throughout the entire length of the coating apparatus.

In the electroless deposition process, referring to Fig. 1, the coating deposited from the liquid deposition bath 12 is applied directly to the optical fiber with metallic primary coating. Again, the primary coating may be deposited by the HNTD process or any other suitable process.

The electroless deposition of nickel is based on the controlled, autocatalytic reduction of nickel cations at elevated temperature by means of hypophosphite anions in aqueous solution. The probable reactions are:

$$(H_2PO_2)^- + H_2O \rightarrow H^+ + (HPO_3)^{--} \quad 2H(catal) \quad (1)$$

$$Ni^{++} + 2H(catal) \rightarrow Ni + 2H^+ \quad (2)$$

Hypophosphite ion is dehydrogenated in presence of water. The active hydrogen reduce the nickel ions to metallic nickel. Electroless plating can produce uniform thickness on all areas of the fiber. Properly applied coatings are dense and often relatively nonporous. The coating usually exhibits high corrosion resistance.

The following Table I lists the plating bath compositions for "electroless" plating of nickel, iron and nickel-iron alloy. Here, also, the correct temperature of the bath is essential to insure proper deposition of the secondary

coatings. For the deposition of nickel the bath temperature is approximately 90°C , for iron 76,5-90,5°C and for nickel-iron alloy 21-26,5°C.

TABLE I
Electroless Deposition on Primary Metallic Coating

| Metal | Plating Bath Composition | Bath Temperature (oC) | pH |
|---|---|---|---|
| Ni | $NiCl_2$-$6H_2O$<br>$NaH_2PO_2$ | 90 | 4-6 |
| Fe | $FeSO_4$-$6H_2O$<br>Rochelle Salt<br>$NaH_2$ $PO_2$ | 76,5-90,5 | 8-10 |
| Ni-Fe alloy | $NiSO_4$-$6H_2O$<br>$FeSO_4$-$6H_2O$<br>Na-citrate | 21-26,5 | 4-8 |

In Fig. 1 it may be seen that the fiber 17 which has acquired both a primary and a secondary coating is conducted through the interior of the polymer coater 18 after emerging from the liquid deposition bath 12. The polymer coater 18 is of conventional construction so that no details thereof need be discussed here. Suffice it to say that at least one additional layer of coating of an organic material such as a polymer, is applied on top of the aforementioned hermetic coatings produced in the reactor 8 and liquid deposition bath 12. After this polymer coating 43 has been applied, the fiber 41 passes through the curing oven 20 where the polymer coating 43 is cured, especially by applying heat thereto, to give such a coating the desired properties. Even the construction of the curing oven 20 is conventional and will not be described here. Finally, the now coated fiber 21 reaches the drawing mechanism or spool 22 to be wound thereon for at least temporary storage purposes.

In the electrodeposition process, referring to Fig. 2, a source of electric current 24 is provided to the liquiddeposition bath 12 to cause the formation of a secondary metallic coating onto the primary metallic coating.

In this process, it is preferable that the fiber be in a static condition. Therefore, the fiber will continue to be drawn and wound on the drawing mechanism 22 until such time as electrodeposition is to be performed. At that time, the fibers are cut by cutting means 23 into lengths of fiber which will fit into the liquid bath 12. Hence, short lengths of fiber of approximately one meter are especially adapted to this process.

In order for current to be applied through the liquid deposition bath, two electrodes are provided. The cathode terminal is connected to a metal plate 26 from which the short lengths of fiber are suspended An anode terminal 25 may be made of the same metal that is to be plated or any other material which will act as a conductor but not be affected by the chemicals of the bath. The metals to be plated out of the bath include nickel, chromium or iron or any other metal suitable for adhering to the primary metallic coating 41. The following Table II gives the bath compositions and anode materials for nickel, chromium and iron. Table II also includes the reaction temperatures for nickel, chromium and iron. The surface temperature of the fiber as it enters the liquid deposition bath 12 should be at room temperature so that the reaction conditions such as ionic concentration at the location of the deposition of the secondary coating 42 will not be adversely affected.

The thickness, uniformity and adherence characteristics of the secondary metallic coating 42 can be more precisely controlled by varying parameters, such as electrolyte composition, ion concentration, current density and anodic and cathodic overpotentials. Table II also lists preferred current densities and pH values for

the three given metals. In addition, the geometric shape of the container holding the liquid deposition bath may be varied to change the ionic flux at the area adjacent thefiber surface. Also, agitation of the bath solution will increase the movement of the ions and hence increase the deposition rate and in turn the coating thickness.

TABLE II

Electrodeposition on Primary Metallic Coating

| Metal | Plating Bath Composition | Bath Temperature (oC) | pH | Current Density $(A/m^2)$ | ~~Anode~~ |
|---|---|---|---|---|---|
| Ni | $NiSO_4$-$6H_2O$<br>$NiCl_2$-$6H_2O$<br>Boric Acid | 54,5 | 2-5 | 107,5-646 | Nickel (cast or rolled) |
| Cr | $CrO_3$<br>$H_2SO_4$ | 43-49 | | 1076 | Lead (6% Sb,Sn) |
| Fe | $FeSO_4$-$7H_2O$<br>$FeCl_2$-$4H_2O$ | 38 | 4.5-6.0 | 538-1076 | Low Carbon Steel |

If desired, the short lengths of fiber 17 which have acquired both a primary and a secondary coating may then be passed through the interior of the polymer coater 18 for the application of at least one additional layer of coating of an organic material, such as a polymer. After the polymer coating 43 has been applied, the fiber 19 passes through the curing oven 20 where the polymer coating 43 is cured.

Another method of applying the secondary coating is now described.

By means of this method, the formed fiber 4 in its final condition existing after it has emerged from a curing oven 123 will be similar to that shown in Fig. 3, except that the primary coating 41 may be either metallic or dielectric.

In this method also, the primary coating and the secondary coating processes have to be carried out in between the drawing-furnace 3 and the polymer coater 121.

Referring to Fig. 4, it may be seen that the fiber 4 which has acquired a primary hermetic coating in the reactor 8, is identified as fiber 112. The fiber 112 is conducted through the secondary reactor 115. At this point, the surface temperature of the primary coated fiber 112 has dropped, due to loss of retained heat, below the temperature required for a secondary coating deposition by means of the HNTD process. It is, therefore, necessary to supply additional heat to the coated fiber 112. This heating may be accomplished by means of a heater 113 which heats the fiber 112 before it enters the secondary reactor 115. The heater 113 may be a resistance heater, laser heater, plasma heater, infrared heater or any other suitable source. The heated fiber 112, then enters the secondary reactor 115 where the second coating 42 may be deposited by means of the HNTD process in which the growth of coating particles and the deposition thereof both occur at the outer surface of the primary coating 41.

The secondary deposition process may be accomplished by means of a CVD or other process where the growth of the coating particles occurs at an area adjacent to the primary coated surface and the formed particles are deposited onto the primary coating 41. In the CVD process the reactant gas is heated to bring the temperature of the reactant gas to the level required for deposition to occur. One way to accomplish this is to have the secondary reactor 115 provided with a heater (not shown). In this way, the heater will heat the contents of the secondary reactor 115 and will thereby bring the temperature of the reactant gas to the temperature level required for deposition onto the primary coated fiber 112 to occur. Such a heater may be a resistance heater, laser heater, plasma heater, infra-red heater or any other suitable source.

In the HNTD process the primary coated fiber 112 is conducted into the interior of the secondary reactor 115 which has an inlet port 116 into which an reactant gas is admitted and outlet ports 117 from which the spent reactant gas is discharged. A currently preferred construction of the secondary reactor 115 is more fully described below with reference to Fig. 6. As described above, in the HNTD process for depositing the primary coating 41 the reactant gas consists of or contains at least one reactant or substance which, when heated to a predetermined temperature, releases the material of the hermetic coating which is to applied to the exterior of a fiber. In the secondary deposition process the coating particles are applied to the exterior of the primary coated fiber 112.

The vapor of the volatile metal compounds constituting the reactants entering the inlet port 116 is generated by evaporation. This evaporation may be accomplished either by heating a volatile compound or by passing a non-reactive gas over or through the volatile compound and reacting into metal or dielectric immediately at the surface of the fiber 112 with simultaneous deposit. It may be seen that the reactant gas passes through the secondary reactor 115 in cocurrent flow to the advancement of the fiber 112 through the reactor 115. Any volatile byproducts must be transported away through the outlet ports 117.

The secondary reactor 115 is also designed to maintain a pressure inside the reactor that is slightly below that of the atmosphere so that the reactants cannot escape from the reactor 115 during movement of the fiber 112 therethrough. Irises 114 and 118 are positioned at the entrance and exit respectively of the secondary reactor 115 to aid in preventing escape of the reactant gas.

A diameter controller, designated as 120 may be provided after the iris 118 to permit supervision of the drawing operation.

As shown in Fig. 5, the shielding element 5, the iris 107, the inlet port 9, the iris 111 and the oulet ports 10 and the primary reactor 8 are each incorporated in separate modules of the apparatus 101. In Fig. 6, it can be seen that the inlet port 116 and the oulet ports 117 of the secondary reactor 115 are also each incorporated in separate modules of the apparatus 101. Each of these modules is joined to another module and each can be easily separated therefrom. This construction is referred to as a modular construction. By means of this modular construction each of these modules, indicated in Figs. 5 and 6 by reference numbers 130-138, can be removed or replaced for repair, cleaning, or other maintanence without having to disassemble the entire apparatus 101. There are several other advantages to this type of modular construction. For example, if it is desired to increase the thickness of the primary coating 41 by increasing the dwell time of the optical fiber in the primary reactor 8, rather than reducing the drawing speed, the length of the primary reactor 8 may be increased. This is easily accomplished by replacement of the modular unit 132 with another unit having a longer length but performing the same function as the original unit 132. Another advantage is that the separate units may be repositioned to permit coaxial alignment of the internal bore of the separate units with the fiber passing therethrough. In this way,the fiber may be so positioned as to pass through the center of the opening in each of the irises 107, 111, 114 and 118. If the fiber were to pass through such irises

off center, damage could occur to the outer surface of the fiber. Additionally, coaxial alignment of the fiber and the internal bore of the separate unit will allow the reactant gasses to flow more evenly between the outer surface of the fiber and the bore of the unit resulting in a more uniform deposition of the primary and secondary coatings. Although the secondary reactor 115 is shown in Fig. 6 as one unit, it may consist of several modules in a manner similar to that of the primary reactor 8. Such modules may be interposed at the breakline indicated in Fig. 6. Also at the breakline may be interposed the heater referred to above with respect to the application of a secondary coating by a CVD process.

The separate units 130-138 are joined together by any suitable securing means, such as nuts and bolts passing through holes located in laterally extending portions of each unit. The unit 130 which constitutes the shielding element 5 is joined to the drawing furnace 3 by securing elements 140. The unit 131 containing the iris 107 is secured to the unit 130 by securing elements 141. The unit 132 containing the inlet port 9 is secured to unit 130 by securing elements 142. In a similar manner, the unit 133 is secured to the unit 132, the unit 134 is secured to the unit 132, and the unit 135 is secured to joins the unit 134 in turn by respective securing elements 143, 144 and 145. Securing elements 146 join the primary reactor 8 to the lower portion of the apparatus 101. Referring to Fig. 6, it is seen that modular units of the secondary reactor 115 are secured in a comparable manner. The unit 137 is secured to the units 136 and 149. Securing elements 147 join the secondary reactor to 115 to the upper portion of the apparatus 101, in particular, the iris 114. Additional modular units may be interposed between the structure shown in Figs. 5 and 6, namely between the units 135 and 136. For example, the iris 114 may be constructed in a modular manner analogous to that of the irises 107 and 111.

Also, in Fig. 4 it may be seen that the fiber 119 which has acquired both a primary and a secondary coating is conducted through the interior of the polymer coater 121 after emerging from the secondary reactor 115. The polymer coater 121 is of conventional construction so that no details thereof may be discussed here. Suffice it to say that at least one additional layer of coating of an organic material such as a polymer is applied on top of the before mentioned hermetic coatings produced in the reactors 8 and 115. The fiber 119, after this polymer coating 43 has been applied thereto, is converted into a fiber 122 which passes through the curing oven 123 where the polymer coating 43 is cured, especially by applying heat thereto, to give the coating the desired properties. Even the construction of the curing oven 123 is conventional and will not be described here. Finally, the fiber 122 which has been converted into a coated fiber 124 reaches the drawing arrangement or spool 125 to be wound thereon for at least temporary storage purposes.

While we have described above the principles of our invention in connection with specific apparatus, it is to be clearly understood that this description is made only by way of example and not as a limitation to the scope of our invention as set forth in the objects thereof and in the accompanying claims.

CLAIMS

1. A method of forming a hermetically coated optical fiber comprising the steps of:

forming a fiber from an optical material at an elevated forming temperature;

depositing a primary coating on the outer surface of the fiber within a first predetermined temperature range; and

applying a secondary coating on the outer surface of the primary coating;

at least one of the primary coating and the secondary coating being hermetic.

2. The method as claimed in claim 1 wherein said depositing step includes passing the fiber through a gaseous medium containing at least one reactant capable of undergoing a chemical conversion into a material of the primary coating

3. The method as claimed in claim 1 further comprising the step of:

utilizing the heat contents of the fiber from the fiber forming process to provide the first predetermined temperature.

4. The method as claimed in claim 1 wherein said applying step includes immersing the primary coated fiber into a liquid medium containing at least one reactant capble of deposition at a second predetermined temperature onto said primary coating to form said secondary coating.

5. The method of claim 4 wherein the passing and immersing steps include producing metallic coatings.

6. The method of claim 4 further comprising applying a potential difference through the liquid medium for inducing the deposition.

7. The method of claim 4 wherein the applying step includes supplying a predetermined electrical potential to the primary coating.

8. The method of claim 6 wherein the at least one reactant is a compound containing a metal selected from the group consisting of nickel, chromium and iron.

9. The method of claim 8 wherein the predetermined temperature for the nickel compound is approximately 54,5°C.

10. The method of claim 8 wherein the predetermined temperature for the chromium is approximately 43-49°C.

11. The method of claim 8 wherein the predetermined temperature for the iron compound is approximately 38°C.

12. The method of claim 4 wherein the immersing step includes maintaining the primary coating and the liquid medium at substantially the same electric potential.

13. The method of claim 12 wherein the at least one reactant is a compound containing a metal selected from the group consisting of nickel, iron and a nickel-iron alloy.

14. The method of claim 13 wherein the predetermined temperature for the nickel compound is approximately 90°C.

15. The method of claim 13 wherein the predetermined temperature for the iron compound is approximately 76,5-90,5°C.

16. The method of claim 13 wherein the predetermined temperature for the nickel-iron alloy is approximately 21-26,5°C.

17. The method of claim 4 further comprising the step of agitating the liquid medium during the immersing step in order to increase the deposition rate of the secondary coating.

18. The method of claim 1 further comprising applying a polymer coating to the outer surface of the additional coating.

19. The method of claim 1 wherein said forming step includes drawing the optical fiber from a preform.

20. The method of claim 1 wherein at least one of said depositing step and said applying step includes depositing at a pressure below ambient pressure.

21. The method of claim 2 wherein the material of the depositing step includes a metal selected from the group consisting of aluminum and nickel.

22. The method of claim 2 wherein the material of the depositing step includes a dielectric material.

23. The method of claim 22 wherein the dielectric material is tin oxide.

24. An arrangement for applying coatings on optical fibers comprising:

means for forming an optical fiber from a preform at a fiber forming temperature;

means for depositing a primary coating on the optical fiber; and

means for depositing a secondary coating on said primary coating.

25. A hermetically coated optical fiber comprising:

a fiber;

a first coating deposited on the outer surface of said cladding; and

a second coating deposited on the outer surface of said first coating.

26. The fiber of claim 25 wherein said secondary coating was deposited from a liquid medium containing reactants capable of deposition onto the primary coating at a predetermined temperature.

27. The fiber of claim 24 further comprising means for maintaining the temperature of the outer surface of the fiber at a predetermined level utilizing the heat retained at the fiber surface from the fiber formation.

28. The fiber of claim 25 wherein said first coating was deposited from a gaseous medium containing at least one reactant capable of undergoing a chemical conversion into a material of the hermetic coating at the predetermined temperature.

29. The fiber of claim 26 wherein the first and second coatings are metallic.

Fig. 1

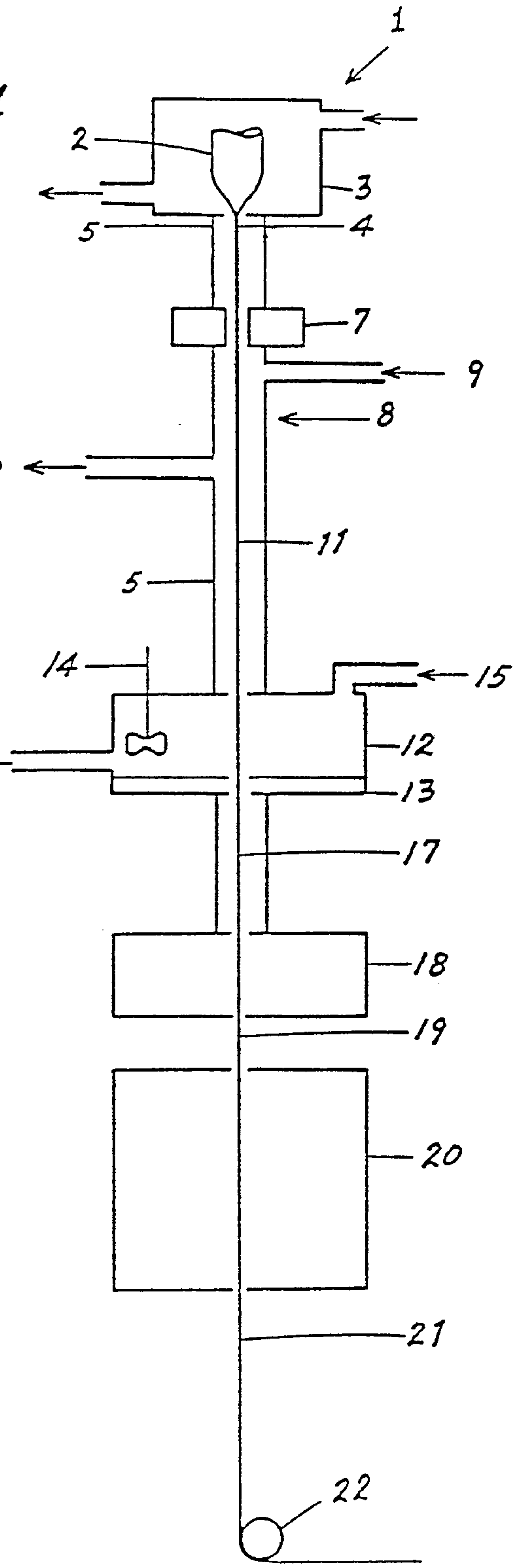


Fig. 3

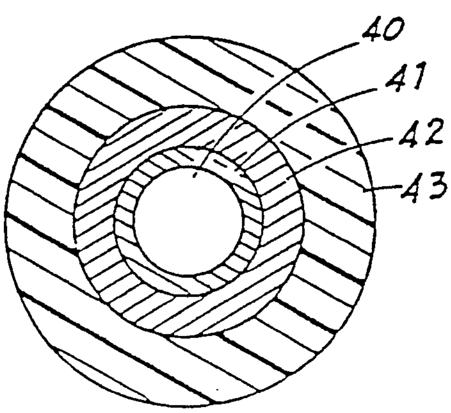

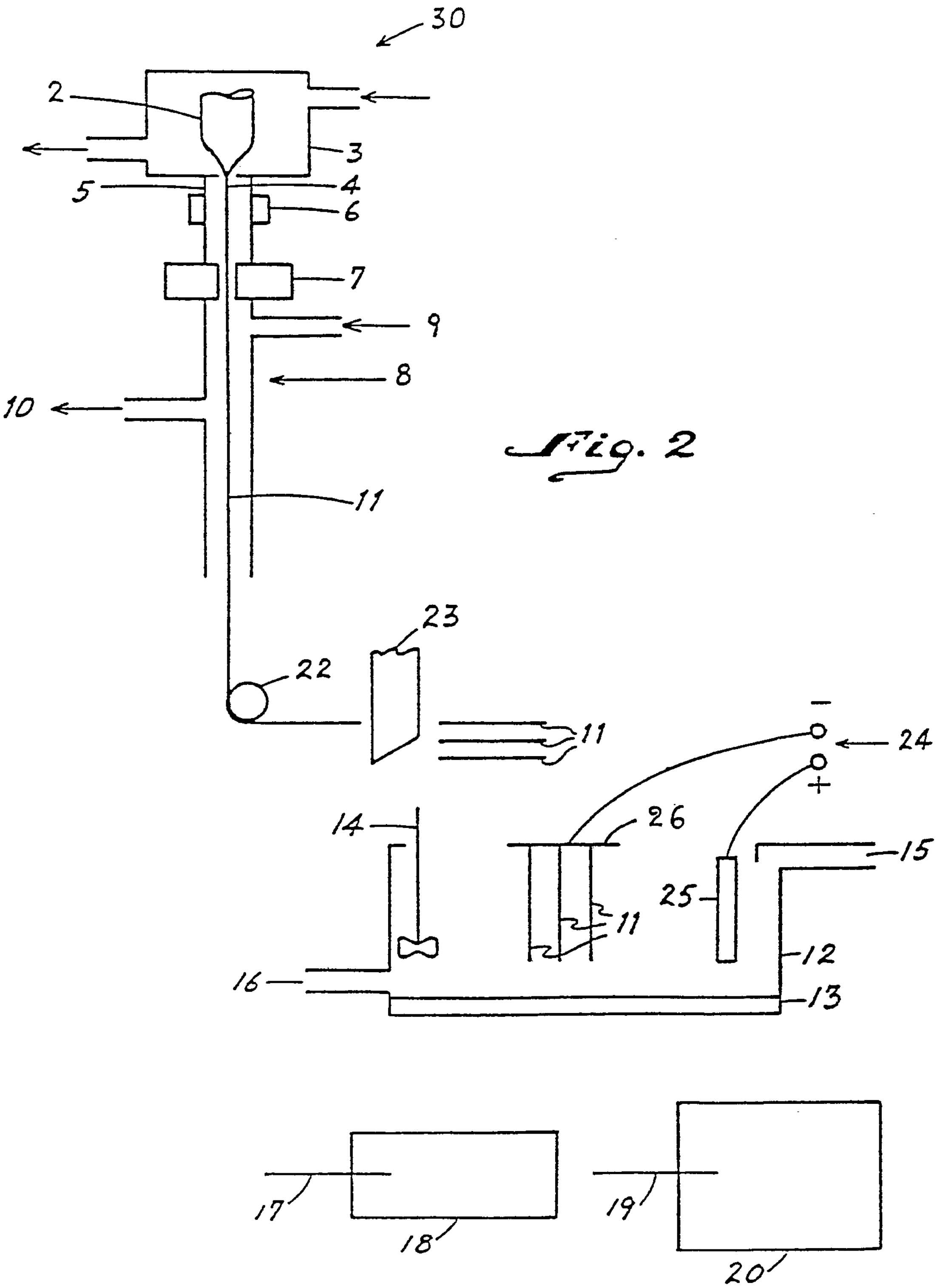


Fig. 2

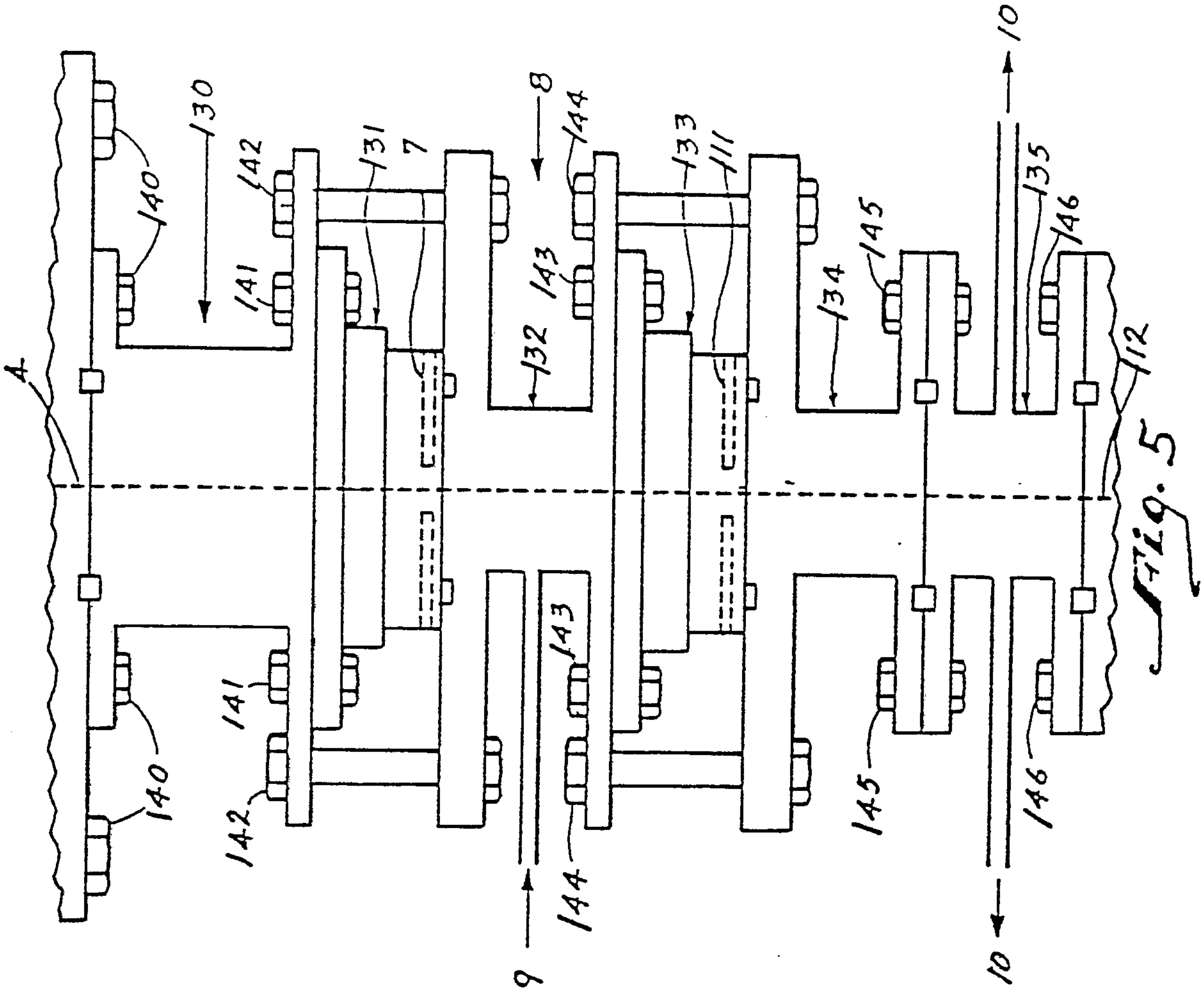
A
130
140
141
142
131
7
132
8
144
143
9
133
111
134
145
10
135
146
112

Fig. 5

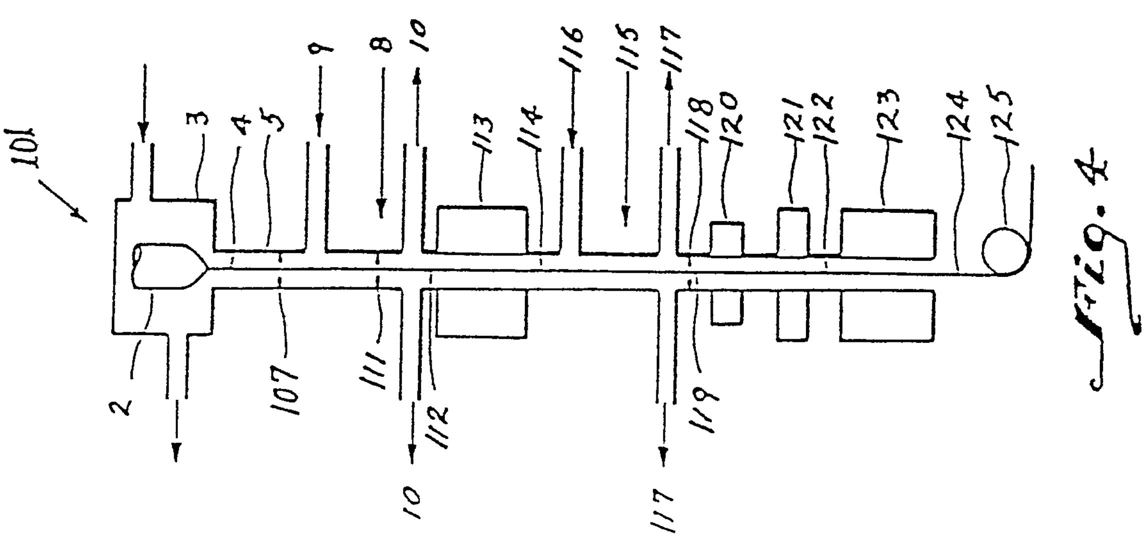
101
2
3
4
5
107
9
8
10
111
112
113
114
116
115
117
118
119
120
121
122
123
124
125

Fig. 4

0166649



Fig. 6

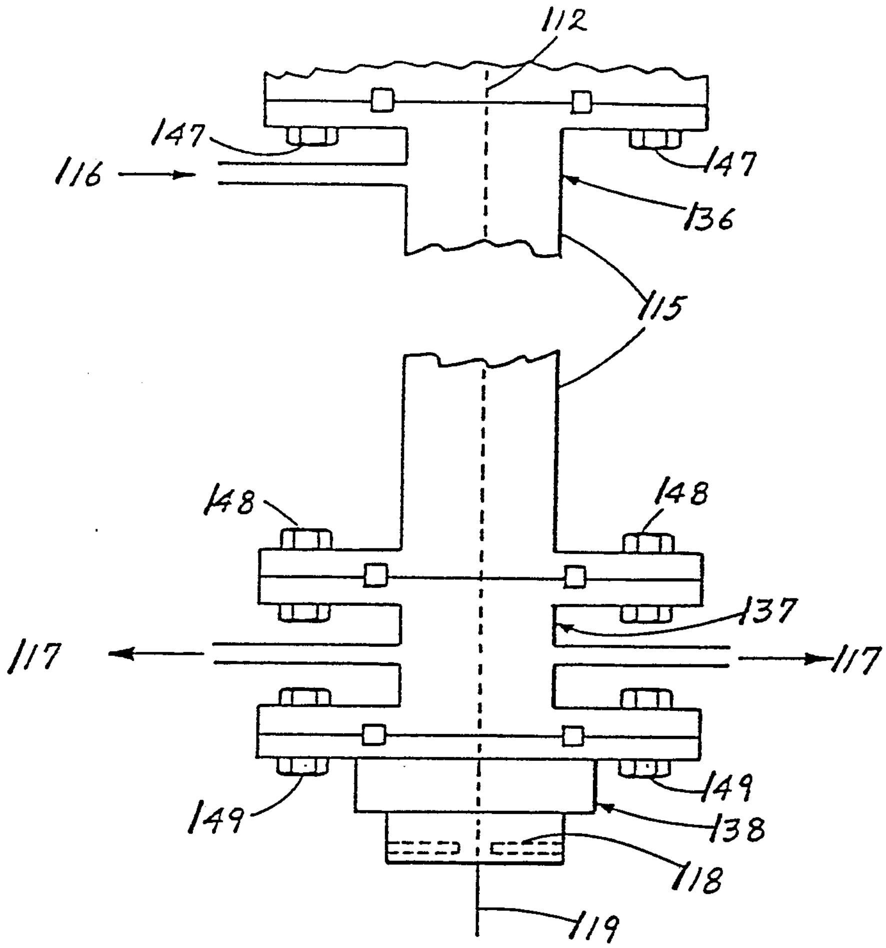


Fig. 7